# EUROPEAN PATENT APPLICATION

(11) **EP 4 353 890 A1**
(43) Date of publication of application: **17.04.2024**
(21) Application number: 22820265.1
(22) Date of filing: 08.06.2022
(51) Int. Cl.: D06C 15/08, C08G 18/10, C08G 18/65, C08G 18/75

(54) **COATING MATERIAL FOR CALENDER ROLL AND CALENDER ROLL**

(30) Priority: 10.06.2021 JP 2021097396
(71) Applicant: Yamauchi Corporation, Hirakata-shi, Osaka 573-1132 (JP)
(72) Inventor: SHIMAZAKI, Hiroya, Hirakata-shi, Osaka 573-1132 (JP)
(74) Representative: Müller Hoffmann & Partner
(86) International application number: PCT/JP2022/023137
(87) International publication number: WO 2022/260086

(57) **Abstract**

A coating material for a calender roll comprises a cured product of a resin composition that comprises a urethane prepolymer component that is a reaction product of a diisocyanate and a polyol, and a curing agent component that comprises at least one of a diamine and a diol, and the diisocyanate comprises isophorone diisocyanate. A calender roll comprises a roll core material and the coating material for a calender roll that coats an outer periphery of the roll core material.

## Description

### TECHNICAL FIELD

The present invention relates to a coating material for a calender roll and a calender roll.

### BACKGROUND ART

Japanese Patent Laying-Open No. 8-41796 (PTL 1) discloses a calender elastic roll in which a hard resin layer that is an outside elastic layer is composed of a polyurea resin. WO88/09846 (PTL 2) discloses a calender resin roll in which the resin constituting the surface layer is a polyurethane resin. Japanese Patent Laying-Open No. 2018-187890 (PTL 3) discloses a calendering resin roll comprising a surface layer that comprises a urethane resin, wherein the urethane resin is a polymer of a urethane prepolymer that has dicyclohexylmethane diisocyanate groups at both ends, and a curing agent that is a diamine or a diol.

### CITATION LIST

### PATENT LITERATURE

PTL 1: Japanese Patent Laying-Open No. 8-41796
PTL 2: WO88/09846
PTL 3: Japanese Patent Laying-Open No. 2018-187890

### SUMMARY OF INVENTION

### TECHNICAL PROBLEM

However, a problem of the calender elastic roll disclosed in Japanese Patent Laying-Open No. 8-41796 (PTL 1) is that the reaction when the hard resin layer is molded is quick, and therefore pinholes are likely to occur. A problem of the calender resin roll disclosed in WO88/09846 (PTL 2) is that it has poor heat resistance and therefore cannot withstand calendering under high heat conditions. A problem of the calendering resin roll disclosed in Japanese Patent Laying-Open No. 2018-187890 (PTL 3) is that it has low wear resistance.

Accordingly, it is an object of the present invention to solve the problems and provide a coating material for a calender roll and a calender roll that have high heat resistance and wear resistance and are preferred for calendering.

### SOLUTION TO PROBLEM

A coating material for a calender roll according to one aspect of the present invention comprises a cured product of a resin composition that comprises a urethane prepolymer component that is a reaction product of a diisocyanate and a polyol, and a curing agent component that comprises at least one of a diamine and a diol, and the diisocyanate comprises isophorone diisocyanate.

A calender roll according to one aspect of the present invention comprises a roll core material and the coating material for a calender roll that coats an outer periphery of the roll core material.

### ADVANTAGEOUS EFFECTS OF INVENTION

According to the above, it is possible to provide a coating material for a calender roll and a calender roll that have high heat resistance and wear resistance and are preferred for calendering.

### BRIEF DESCRIPTION OF DRAWINGS

Fig. 1 is a schematic view showing one example of a coating material for a calender roll according to one mode of the present invention.
Fig. 2 is a schematic view showing one example of a calender roll according to one mode of the present invention.

### DESCRIPTION OF EMBODIMENTS

### <Embodiment 1: Coating Material for Calender Roll>

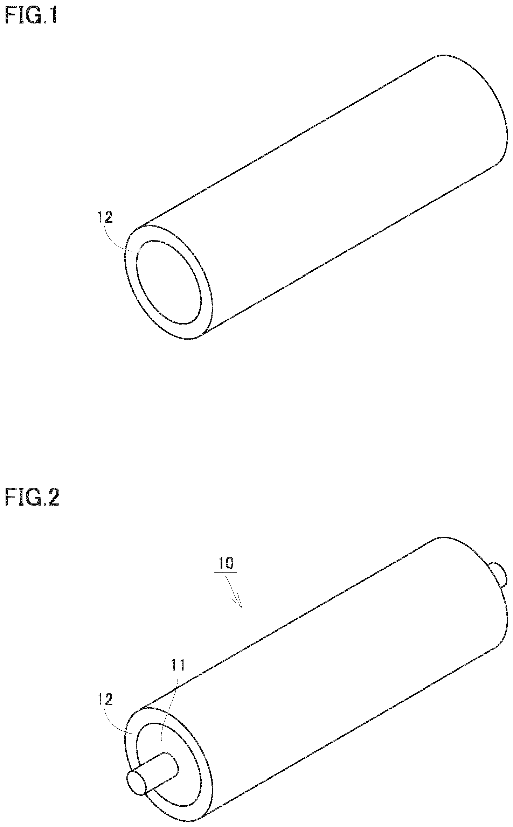

With reference to Fig. 1, a coating material 12 for a calender roll in this embodiment comprises a cured product of a resin composition that comprises a urethane prepolymer component that is a reaction product of a diisocyanate and a polyol, and a curing agent component that comprises at least one of a diamine and a diol, and the diisocyanate comprises isophorone diisocyanate (hereinafter also referred to as IPDI). The coating material for a calender roll in this embodiment has high heat resistance and wear resistance and is preferred for calendering.

The shape of coating material 12 for a calender roll in this embodiment is cylindrical, as shown in Fig. 1. Coating material 12 for a calender roll can be used as a calender roll 10 by coating the outer periphery of a roll core material 11 with coating material 12 for a calender roll, as shown in Fig. 2.

Calendering refers to processing in which in order to adjust the gloss, tint, texture, and the like of a woven fabric or a nonwoven fabric used for clothing and the like, temperature and pressure are applied to the woven fabric or the nonwoven fabric by passing the woven fabric or the nonwoven fabric between a metal roll that comprises a heating mechanism and a calender roll that is an elastic roll. In such calendering, it is required that moderate glossiness be provided to the woven fabric or the nonwoven fabric, that the decrease in tint (color difference) be small, and that a good texture (feel) be provided. Coating material 12 for a calender roll in this embodiment can provide a moderate gloss with not too high glossiness to a woven fabric or a nonwoven fabric in calendering, and therefore the woven fabric or the nonwoven fabric can be matte-finished. In addition, when coating material 12 for a calender roll in this embodiment is used, the decrease in the tint (color difference) of a woven fabric or a nonwoven fabric is small before and after calendering, and therefore the woven fabric or the nonwoven fabric can be finished in the target tint. Further, when coating material 12 for a calender roll in this embodiment is used, a good texture (feel) can be provided to a woven fabric or a nonwoven fabric.

### [Urethane Prepolymer Component]

The urethane prepolymer component in the cured product of the resin composition included in coating material 12 for a calender roll in this embodiment is a component derived from a urethane prepolymer and is the reaction product of a diisocyanate and a polyol. Here, the urethane prepolymer reacts with a curing agent described later to form the cured product of the resin composition, and comprises an isocyanate group (NCO group) at at least one end of the urethane prepolymer.

### (Diisocyanate)

The diisocyanate that reacts with a polyol to obtain the urethane prepolymer comprises isophorone diisocyanate (hereinafter also referred to as IPDI). IPDI is a diisocyanate referred to as 3-isocyanatomethyl-3,5,5-trimethylcyclohexyl isocyanate by the IUPAC name. The coating material for a calender roll in this embodiment comprises in the urethane prepolymer component an IPDI-derived component that is the reaction product of IPDI and a polyol, and thus has high heat resistance and wear resistance, is preferred for calendering, and provides moderate glossiness to a woven fabric or a nonwoven fabric, causes a small decrease in tint (color difference), and can provide a good texture (feel) in calendering.

The diisocyanate may comprise a diisocyanate other than IPDI, for example, toluene diisocyanate (hereinafter also referred to as TDI), diphenylmethane diisocyanate (hereinafter also referred to as MDI), dicyclohexylmethane diisocyanate (hereinafter also referred to as H-MDI), 1,4-phenylene diisocyanate (hereinafter also referred to as PPDI), or hexamethylene diisocyanate (hereinafter also referred to as HDI). That is, the urethane prepolymer component may be the reaction product of IPDI and a diisocyanate other than IPDI with a polyol or may be a mixture of the reaction product of IPDI and a polyol and the reaction product of a diisocyanate other than IPDI and a polyol. Here, the content of IPDI in 100% by mass of the diisocyanate is not particularly limited but is preferably 50% by mass or more, more preferably 75% by mass or more, and further preferably 90% by mass or more from the viewpoint of enhancing the above effects of the IPDI-derived component.

In the coating material for a calender roll in this embodiment, from the viewpoint that its heat resistance and wear resistance are higher, and it is more preferred for calendering and provides moderate glossiness to a woven fabric or a nonwoven fabric, causes a smaller decrease in tint (color difference), and provides a good texture (feel) in calendering, the diisocyanate is preferably IPDI. That is, the urethane prepolymer component is preferably the reaction product of IPDI and a polyol.

### (Polyol)

The polyol that reacts with the diisocyanate to obtain the urethane prepolymer is not particularly limited but is preferably an aliphatic polyol, more preferably at least either of a polyether polyol and a polyester polyol of aliphatic polyols, from the viewpoint of obtaining a coating material for a calender roll that has high heat resistance and wear resistance and is preferred for calendering. Preferred examples of the polyether polyol include polyethylene glycol (hereinafter also referred to as PEG), polypropylene glycol (hereinafter also referred to as PPG), and polytetramethylene glycol (hereinafter also referred to as PTMG). Preferred examples of the polyester polyol include polycaprolactone-based polyols, polycarbonate-based polyols, polyethylene adipate-based polyols, polybutylene adipate-based polyols, and polyhexene adipate-based polyols. These aliphatic polyols can be used singly, or two or more of these aliphatic polyols can be mixed or polymerized to be used, and further modified products thereof can also be used.

### [Curing Agent Component]

The curing agent component that constitutes coating material 12 for a calender roll in this embodiment is a component derived from a curing agent that reacts with the urethane prepolymer. Here, the curing agent reacts with the urethane prepolymer to form the cured product of the resin composition, and comprises at least one of a diamine and a diol. The curing agent preferably comprises a diamine from the viewpoint of more enhancing the heat resistance and wear resistance of the cured product obtained by the reaction with the urethane prepolymer.

### (Diamine)

The diamine is not particularly limited, but from the viewpoint of obtaining a coating material for a calender roll that has high heat resistance and wear resistance and is preferred for calendering, preferred examples include 4,4'-methylene-bis(2-chloroaniline) (hereinafter also referred to as MOCA), trimethylene-bis(4-aminobenzoate) (hereinafter also referred to as CUA-4), diethyltoluenediamine (hereinafter also referred to as DETDA), dimethylthiotoluenediamine (hereinafter also referred to as DMTDA), and 4,4'-methylene-bis(3-chloro-2,6-diethylaniline) (hereinafter also referred to as M-CDEA). Further, from the above viewpoint, the diamine is more preferably MOCA.

### (Diol)

The diol is not particularly limited, but from the viewpoint of obtaining a coating material for a calender roll that has high heat resistance and wear resistance and is preferred for calendering, preferred examples include 1,4-butanediol (hereinafter also referred to as 1,4-BD), cyclohexanediol (hereinafter also referred to as 1,4-CHD), and polycarbonate diol (hereinafter also referred to as PCD). Further, from the above viewpoint, 1,4-BD is more preferred.

The types and content of the urethane prepolymer component, the curing agent component, the isocyanate and the polyol in the urethane prepolymer component, and the diamine and the diol in the curing agent component in the coating material for a calender roll can be measured by conventional measuring equipment (for example, a pyrolysis gas chromatograph (Py-GC), a Fourier transform infrared spectrophotometer (FT-IR), or a nuclear magnetic resonator (NMR)).

### [Durometer D Hardness on Surface]

The coating material for a calender roll in this embodiment preferably has a durometer D hardness of 60 or more and 90 or less on the surface from the viewpoint of being preferred for calendering. From the above viewpoint, the durometer D hardness on the surface is more preferably 65 or more and 85 or less, further preferably 70 or more and 80 or less, particularly preferably 72 or more and 78 or less, and most preferably 74 or more and 76 or less. Here, the durometer D hardness on the surface of the coating material for a calender roll is the hardness measured by a type D durometer in accordance with JIS K6253-3: 2012.

### [Method for Producing Coating Material for Calender Roll]

The method for producing the coating material for a calender roll in this embodiment is not particularly limited, and a conventional production method is preferably used. Preferred examples include a method in which a urethane prepolymer that is an NCO component raw material, and a curing agent that is a curing agent component raw material are injected into a cylindrical die and cured by heating. In such a method, rotational molding in which curing is performed while the cylindrical die is rotated around the central axis in the length direction is preferred. When rotational molding is not used, a method is possible in which a double structure mold that comprises a cylindrical outer mold and a cylindrical inner mold and has a doughnut-shaped cross section is provided, and a urethane prepolymer that is an NCO component raw material, and a curing agent that is a curing agent component raw material are injected into the gap between the outer mold and the inner mold and cured by heating. It is preferred that after primary curing by primary heating in a die, the urethane elastomer removed from the die be secondarily cured by secondary heating.

### <Embodiment 2: Calender Roll>

With reference to Fig. 2, a calender roll 10 of this embodiment comprises a roll core material 11 and coating material 12 for a calender roll in embodiment 1 that coats the outer periphery of roll core material 11. Calender roll 10 of this embodiment comprises coating material 12 for a calender roll in embodiment 1 and therefore has high heat resistance and wear resistance, is preferred for calendering, and provides moderate glossiness to a woven fabric or a nonwoven fabric, causes a small decrease in tint (color difference), and can provide a good texture (feel) in calendering.

### [Roll Core Material]

Roll core material 11 included in calender roll 10 of this embodiment is not particularly limited as long as it has mechanical strength and high temperature strength that can be used as a calender roll. Roll core material 11 can be composed of, for example, a metal such as iron or an iron alloy. An underlayer that comprises a resin or an FRP (fiber-reinforced plastic), or an underwinding layer (hereinafter also referred to as an FW layer) obtained by winding fibers to and/or into which a resin is applied and/or impregnated (that is, filament winding (FW)) may be formed on the outer peripheral surface of such a roll core material.

### [Coating Material for Calender Roll]

In calender roll 10 of this embodiment, coating material 12 for a calender roll that coats the outer periphery of roll core material 11 is the coating material for a calender roll in embodiment 1, and its description is not repeated here. At least one adhesive layer may be interposed between the outer peripheral surface of roll core material 11 or the outer peripheral surface of the underlayer and/or the underwinding layer (FW layer) and the inner peripheral surface of coating material 12 for a calender roll.

### [Method for Producing Calender Roll]

The method for producing calender roll 10 of this embodiment is not particularly limited, and a conventional production method is preferably used. For example, calender roll 10 in which the outer periphery of roll core material 11 is coated with coating material 12 for a calender roll can be formed by inserting roll core material 11 into coating material 12 for a calender roll in embodiment 1, injecting an adhesive into the gap between roll core material 11 and coating material 12 for a calender roll, and curing the adhesive. In addition, calender roll 10 in which the outer periphery of roll core material 11 is coated with coating material 12 for a calender roll can be formed by disposing the roll core material 11 at the center of a cylindrical die as it is or after the adhesive layer is formed, and injecting and curing the raw materials of coating material 12 for a calender roll (that is, a urethane prepolymer that is an NCO component raw material, and a curing agent that is a curing agent component raw material).

### Examples

### [Example 1]

### 1. Fabrication of Coating Material for Calender Roll

With reference to Table 1, 100 parts by mass of an (IPDI + PTMG) prepolymer (NCO equivalent: 375 g/mol, NCO%: 11.2% by mass, viscosity at 80°C: 568 mPa·s) obtained by reacting IPDI (Desmodur I manufactured by Sumika Covestro Urethane Co., Ltd.) with PTMG, as an NCO component raw material, and 33.8 parts by mass of MOCA (CUAMINE MT manufactured by KUMIAI CHEMICAL INDUSTRY CO., LTD., amine value: 420 KOH mg/g) as a curing agent component raw material were stirred, injected into a cylindrical rotational molding die, primarily cured by primary heating, removed from the die, and secondarily cured by secondary heating to fabricate a coating material for a calender roll. Here, before the stirring of the raw materials, the liquid temperature of the NCO component raw material was 80°C, and the liquid temperature of the curing agent component raw material was 120°C. The die temperature was 100°C, the primary heating conditions were 100°C × 2 h with the die rotated at 400 rpm around the central axis in its cylindrical length direction, and the secondary heating conditions were 150°C × 6 h. The fabricated coating material for a calender roll had a cylindrical shape that had an outer diameter of 240 mm and an inner diameter of 200 mm, a thickness of 20 mm, and a length of 250 mm.

The viscosity of the blended liquid immediately after the raw material stirring was 540 mPa·s. The viscosity of the NCO component raw material and the blended liquid was measured in accordance with JIS K7117-1: 1999 using a BII type viscometer manufactured by TOKI SANGYO CO., LTD. The pot life of the blended liquid was 30 min. Here, the pot life of the blended liquid obtained by stirring the NCO component raw material and the curing agent component raw material was defined as the time (min) until the viscosity of the blended liquid reached 50000 mPa·s after the stirring.

### 2. Fabrication of Calender Roll

With reference to Fig. 2, as a roll core material 11 of a calender roll 10, one in which an underwinding layer that had a thickness of 3 mm was formed on the outer peripheral surface of an iron core that had an outer diameter of 190 mm and a length of 250 mm was used. Such an underwinding layer was formed by winding a glass cloth (M200FZ160CY manufactured by UNITIKA LTD.) to which an epoxy resin (main agent: NY-632 manufactured by NAGASE ELEX CO., LTD., curing agent: XNH7432 manufactured by NAGASE ELEX CO., LTD.) was applied, around the outer peripheral surface of the iron core and heating and curing the epoxy resin adhesive.

The roll core material 11 was inserted into coating material 12 for a calender roll fabricated above, an epoxy resin adhesive (main agent: NY-632 manufactured by NAGASE ELEX CO., LTD., curing agent: XNH7432 manufactured by NAGASE ELEX CO., LTD., filler: IMSIL A-8 (silica) manufactured by TATSUMORI LTD.) was injected into the gap between the underwinding layer of roll core material 11 and coating material 12 for a calender roll and heated and cured, and subsequently the outer peripheral surface of coating material 12 for a calender roll was polished to fabricate calender roll 10 that had an outer diameter of 230 mm.

### 3. Characteristic Evaluation

For calender roll 10 fabricated above, its characteristics were evaluated as follows.

### (Pinholes)

The presence or absence of pinholes in the coating material for a calender roll was visually checked. One in which pinholes were noted was evaluated as present, and one in which no pinholes were noted was evaluated as absent.

### (Durometer D Hardness)

A sample that had a thickness of 10 mm was cut from the surface layer of the coating material for a calender roll, and the durometer D hardness of the sample was measured in accordance with JIS K6253-3: 2012 using ASKER Durometer Type D manufactured by Kobunshi Keiki Co., Ltd. The result is shown in Table 1.

### (Glossiness)

A cloth passing test was performed in which a polyester plain-woven fabric that had a thickness of 0.055 mm (fiber diameter: 0.10 mm, thread count: 73/cm) was passed between a heat roll that had an outer diameter of 250 mm and a length of 300 mm and the calender roll. The cloth passing conditions were heat roll temperature: 140°C, linear pressure: 200 kN/m, and calender roll rotation speed: 10 rpm. The 85° specular gloss (Gs (85°)) of the polyester plain-woven fabric after the cloth passing was measured in accordance with JIS Z8741: 1997 using a handy type glossmeter PG-IIM manufactured by Nippon Denshoku Industries Co., Ltd. The result is shown in Table 1.

### (Color Difference)

The chromaticity of the polyester plain-woven fabric before and after the cloth passing was measured in accordance with JIS Z8781-4: 2013 using a handy type color difference meter NF555 manufactured by Nippon Denshoku Industries Co., Ltd.

From the measured chromaticity before and after the cloth passing, the color difference ΔE_{CMC(2:1)} by CMC(2:1) according to the (JA.2) formula described in JA.3 Color Difference by CMC(1:c) in Annex JA of JIS Z8781-6: 2017, wherein 1 = 2 and c = 1, was calculated. A smaller color difference is better. The result is shown in Table 1.

### (Texture)

The texture of the polyester plain-woven fabric after the cloth passing was evaluated by the sense of touch by hand. A cloth that did not feel rough was evaluated as good, and a cloth that felt rough was evaluated as poor. The result is shown in Table 1.

### (Change in Durometer D Hardness)

A continuous running test was performed in which a heat roll that had an outer diameter of 250 mm and a length of 300 mm and the calender roll were continuously run in a contact state for a long period. The continuous running conditions were a heat roll temperature of 140°C, linear pressure: 200 kN/m, calender roll rotation speed: 30 rpm, and running period: 1 week. For the calender roll before and after the continuous running test, the durometer D hardness was measured as above, and the change (unit: points) of the durometer D hardness after the continuous running test with respect to the durometer D hardness before the continuous running test was calculated. The result is shown in Table 1. A positive value of the change means an increase in hardness, and a negative value of the change means a decrease in hardness.

### (Relative Amount of Wear)

A sample was cut from the surface layer of the coating material for a calender roll, and the amount of wear of the sample was measured in accordance with JIS K6264-1: 2005 and K6264-2: 2005 using a DIN wear tester manufactured by Toyo Seiki Seisaku-sho, Ltd. The amount of wear of the sample of this Example when the amount of wear of the sample of Comparative Example 1 described later was 100 was calculated as the relative amount of wear. The result is shown in Table 1. A smaller relative amount of wear means higher wear resistance.

### (Heat Resistance)

The heat resistance of the coating material for a calender roll was evaluated by the peak temperature of the loss tangent tan δ in its dynamic viscoelasticity measurement. The peak temperature of tan δ corresponds to glass transition temperature, and therefore a higher peak temperature of tan δ means higher heat resistance. A sample was cut from the surface layer of the coating material for a calender roll, and the peak temperature of the tan δ of the sample was measured in accordance with JIS K7244-4: 1999 using RHEOVIBRON DDV-25GP manufactured by A&D Company, Limited.

### (Dynamic Modulus E' Retention Rate)

A sample was cut from the surface layer of the coating material for a calender roll, the dynamic moduli E' (30°C) and E' (100°C) of the sample at 30°C and 100°C were measured in accordance with JIS K7244-4: 1999 using RHEOVIBRON DDV-25GP manufactured by A&D Company, Limited, and the retention rate of E' (100°C) with respect to E' (30°C) was calculated. The result is shown in Table 1. A higher dynamic modulus E' retention rate means higher thermal stability of the calender roll.

### [Comparative Example 1]

### 1. Fabrication of Coating Material for Calender Roll

A coating material for a calender roll was fabricated as in Example 1 except that with reference to Table 1, 100 parts by mass of a (H-MDI + PTMG) prepolymer (NCO equivalent: 352 g/mol, NCO%: 11.9% by mass, viscosity at 80°C: 504 mPa·s) obtained by reacting H-MDI (Desmodur W manufactured by Sumika Covestro Urethane Co., Ltd.) with PTMG, as an NCO component raw material, 35.9 parts by mass of MOCA (CUAMINE MT manufactured by KUMIAI CHEMICAL INDUSTRY CO., LTD., amine value: 420 KOH mg/g) as a curing agent component raw material, and 0.05 parts by mass of adipic acid (manufactured by TOKYO CHEMICAL INDUSTRY CO., LTD.) as a curing accelerator were used. The viscosity of the blended liquid immediately after the raw material stirring was 480 mPa·s when measured as in Example 1. The pot life of the blended liquid was 24 min when measured as in Example 1.

### 2. Fabrication of Calender Roll

A calender roll was fabricated as in Example 1 except that the coating material for a calender roll fabricated above was used.

### 3. Characteristic Evaluation

For the calender roll fabricated above, the pinholes, durometer D hardness, glossiness, color difference, texture, change in durometer D hardness, relative amount of wear, heat resistance, and dynamic modulus E' retention rate were evaluated as in Example 1. The results are summarized in Table 1.

### [Comparative Example 2]

### 1. Fabrication of Coating Material for Calender Roll

A coating material for a calender roll was fabricated as in Example 1 except that with reference to Table 1, a mixture (NCO equivalent: 150 g/mol, NCO%: 28.0% by mass, viscosity at 50°C: 240 mPa·s) of 65 parts by mass of H-MDI (Desmodur W manufactured by Sumika Covestro Urethane Co., Ltd.) and 35 parts by mass of HDI (Sumidur N3300 manufactured by Sumika Covestro Urethane Co., Ltd.) as an NCO component raw material, and a mixture (amine value: 289 KOH mg/g) of 35 parts by mass of MOCA (CUAMINE MT manufactured by KUMIAI CHEMICAL INDUSTRY CO., LTD.) and 23 parts by mass of a polyamine (ELASMER 1000P manufactured by KUMIAI CHEMICAL INDUSTRY CO., LTD.) as a curing agent component raw material were used, and before the stirring of the raw materials, the liquid temperature of the NCO component raw material was 50°C, and the liquid temperature of the curing agent component raw material was 90°C. The viscosity of the blended liquid immediately after the raw material stirring was 380 mPa.s when measured as in Example 1. The pot life of the blended liquid was 30 min when measured as in Example 1.

### 2. Fabrication of Calender Roll

A calender roll was fabricated as in Example 1 except that the coating material for a calender roll fabricated above was used.

### 3. Characteristic Evaluation

For the calender roll fabricated above, the pinholes, durometer D hardness, glossiness, color difference, texture, change in durometer D hardness, relative amount of wear, heat resistance, and dynamic modulus E' retention rate were evaluated as in Example 1. The results are summarized in Table 1.

### [Comparative Example 3]

### 1. Preparation of Coating Material for Calender Roll

With reference to Table 1, a ready-made coating material for a calender roll formed of 6-nylon (SINVEX SR NAT manufactured by SIRTRES) was bought. The dimensions of coating material 12 for a calender roll were processed to an outer diameter of 260 mm, an inner diameter of 186 mm, and a length of 250 mm.

### 2. Fabrication of Calender Roll

With reference to Fig. 2, as a roll core material 11 of a calender roll 10, an iron core that had an outer diameter of 190 mm and a length of 250 mm was used. The coating material 12 for a calender roll was heated to 120°C, then fitted to the roll core material 11, and cooled. Subsequently, the outer peripheral surface of coating material 12 for a calender roll was polished to fabricate a calender roll that had an outer diameter of 230 mm.

### 3. Characteristic Evaluation

For the calender roll fabricated above, the pinholes, durometer D hardness, glossiness, color difference, texture, change in durometer D hardness, relative amount of wear, heat resistance, and dynamic modulus E' retention rate were evaluated as in Example 1. The results are summarized in Table 1.

**[Table 1]**

| | | | Example 1 | Comparative Example 1 | Comparative Example 2 | Comparative Example 3 |
|---|---|---|---|---|---|---|
| Type of coating material for calender roll | | | IPDI polyurethane | H-MDI polyurethane | Polyurea | 6-nylon |
| Blending | NCO component raw material | (IPDI+PTMG) prepolymer (parts by mass) | 100 | | | Ready-made is bought |
| | | (H-MDI+PTMG) prepolymer (parts by mass) | | 100 | | |
| | | H-MDI (parts by mass) | | | 65 | |
| | | HDI (parts by mass) | | | 35 | |
| | | NCO equivalent (g/mol) | 375 | 352 | 150 | |
| | | NCO% (% by mass) | 11.2 | 11.9 | 28.0 | |
| | | Liquid temperature (°C) | 80 | 80 | 50 | |
| | | Viscosity (above liquid temperature) (mPa/s) | 568 | 504 | 240 | SINVEX SR NAT manufactured by SIRTRES |
| | Curing agent component raw material | MOCA (parts by mass) | 338 | 359 | 35 | |
| | | Adipic acid (parts by mass) | | 0.05 | | |
| | | Polyamine (parts by mass) | | | 23 | |
| | | Amine value (KOHmg/g) | 420 | 420 | 289 | |
| | | Liquid temperature (°C) | 120 | 120 | 90 | |
| | Viscosity of blended stirring (mPa·s) | liquid immediately after raw material | 540 | 480 | 380 | |
| | Pot life of blended liquid (min) | | 30 | 24 | 30 | |
| Characteristic Evaluation | Presence or absence of pinholes | | Absent | Absent | Absent | Present |
| | Durometer D hardness | | 74 | 78 | 76 | 82 |
| | Glossiness [after cloth passing test] | | 2.9 | 4.0 | 3.7 | 4.1 |
| | Color difference [before and after cloth passing test] | | 4.4 | 9.3 | 8.9 | 8.2 |
| | Texture [after cloth passing test] | | Good | Good | Good | Good |
| | Change in durometer D hardness [before and after continuous running test] (points) | | -1 | -1 | -1 | +3 |
| | Relative amount of wear (when Comparative Example 1 is 100) | | 38 | 100 | 88 | 80 |
| | Heat resistance (peak temperature of tan δ: °C) | | 202 | 173 | 168 | 224 |
| | Dynamic modulus E' retention rate [30°C→100°C] (%) | | 67 | 62 | 61 | 25 |

With reference to Table 1, when Comparative Examples 1 to 3 and Example 1 were compared, it was found that the coating material for a calender roll and the calender roll in Example 1 had high heat resistance and wear resistance and were preferred for calendering. A specific description is as follows.
(1) Pot life: In Example 1, the pot life was at the same level as in Comparative Examples 1 and 2, and Example 1 was preferred for the production of a coating material for a calender roll and a calender roll.
(2) Pinholes: In Example 1, a good coating material for a calender roll and a good calender roll without pinholes were obtained as in Comparative Examples 1 and 2. Compared with these, in Comparative Example 3, pinholes were present.
(3) Durometer D hardness: In Example 1, the durometer D hardness was at the same level as in Comparative Examples 1 and 2, and a good coating material for a calender roll and a good calender roll were provided.
(4) Glossiness: It was found that in Example 1, the glossiness was not too high compared with that in Comparative Examples 1 to 3, and a moderate gloss could be provided to a woven fabric or a nonwoven fabric, and therefore Example 1 was preferred for calendering particularly when a woven fabric or a nonwoven fabric was matte-finished.
(5) Color difference: It was found that in Example 1, the decrease in tint (color difference) was small before and after calendering, compared with that in Comparative Examples 1 to 3, and therefore a woven fabric or a nonwoven fabric could be finished in the target tint, and Example 1 was preferred for calendering.
(6) Texture: It was found that in Example 1, the texture was good as in Comparative Examples 1 to 3, and Example 1 was preferred for the calendering of a woven fabric or a nonwoven fabric.
(7) Change in durometer D hardness: It was found that in Example 1, the change in durometer D hardness before and after the continuous cloth passing test was equivalent to that in Comparative Examples 1 and 2 and smaller than that in Comparative Example 3, and Example 1 was preferred for the calendering of a woven fabric or a nonwoven fabric.
(8) Relative amount of wear: It was found that in Example 1, the relative amount of wear was very small compared with those in Comparative Examples 1 to 3, and the wear resistance was very high.
(9) Heat resistance: It was found that in Example 1, the peak temperature of the tan δ was high compared with that in Comparative Examples 1 and 2, and the heat resistance was high. The peak temperature of the tan δ in Comparative Example 3 was high due to the physical properties of 6-nylon.
(10) Dynamic modulus E' retention rate: It was found that in Example 1, a dynamic modulus E' retention rate that was equivalent or more compared with those in Comparative Examples 1 and 2 and very high compared with that in Comparative Example 3 was exhibited, and the thermal stability was high.

The embodiments disclosed this time should be considered as illustrative in all respects and not restrictive. It is intended that the scope of the present invention be shown by the claims rather than the embodiments, and that all changes within the meaning and scope equivalent to the claims be included.

### REFERENCE SIGNS LIST

10 calender roll; 11 roll core material; 12 coating material for a calender roll

## Claims

1. A coating material for a calender roll comprising a cured product of a resin composition that comprises a urethane prepolymer component that is a reaction product of a diisocyanate and a polyol, and a curing agent component that comprises at least one of a diamine and a diol, wherein
the diisocyanate comprises isophorone diisocyanate.

2. The coating material for a calender roll according to claim 1, wherein the diisocyanate is the isophorone diisocyanate.

3. The coating material for a calender roll according to claim 1 or claim 2, having a durometer D hardness of 60 or more and 90 or less on a surface.

4. A calender roll comprising a roll core material and the coating material for a calender roll according to any one of claim 1 to claim 3 that coats an outer periphery of the roll core material.
